# EUROPEAN PATENT APPLICATION

(11) **EP 4 674 693 A1**
(43) Date of publication of application: **07.01.2026**
(21) Application number: 24763174.0
(22) Date of filing: 28.02.2024
(51) Int. Cl.: B60R 11/02

(54) **HOLDER FOR FIXING LOAD AND VEHICLE**

(30) Priority: 28.02.2023 CN 202310223012
(71) Applicant: Shenzhen Yinwang Intelligent Technologies Co., Ltd., Shenzhen, Guangdong 518110 (CN)
(72) Inventor: ZHAO, Cong, Shenzhen, Guangdong 518129 (CN); XU, Hao, Shenzhen, Guangdong 518129 (CN); SHI, Hao, Shenzhen, Guangdong 518129 (CN); ZHANG, Tianzhu, Shenzhen, Guangdong 518129 (CN); XIA, Fan, Shenzhen, Guangdong 518129 (CN)
(74) Representative: Gill Jennings & Every LLP
(86) International application number: PCT/CN2024/078916
(87) International publication number: WO 2024/179494

(57) **Abstract**

A support for fastening a load includes a fastening part (11) and a movable part (12). The fastening part (11) includes a fastening body (111) and a cover body (113). The fastening body (111) is adapted to be fastened to a base and includes a notch (112). The cover body (113) is coupled to the fastening body (111) and adapted to seal the notch (112) in a sealing state. The cover body (113) includes a first magnet (M1) and a lock tongue (114) that are connected to each other. The lock tongue (114) is capable of entering an accommodation cavity of the fastening body (111) in a locking state. The movable part (12) may fasten the load and be detachably mounted to the fastening part (11). The movable part (12) includes a second magnet (M2). When the movable part (12) is mounted to the fastening part (11), the second magnet (M2) may enable, through a magnetic action with the first magnet (M1), the lock tongue (114) to leave the accommodation cavity and change from the locking state to an unlocking state, and enable the cover body (113) to change from the sealing state to an unsealing state under driving of the movable part (12), so that the notch (112) is exposed to accommodate at least a part of the movable part (12). A vehicle including the support is further disclosed. Through the magnetic action, the support ensures that the notch (112) of the support is opened only when being used, and is sealed when not being used, to prevent an object from falling off.

## Description

### TECHNICAL FIELD

This disclosure mainly relates to the vehicle-mounted field, and more specifically, to a support for fastening a load and a vehicle.

### BACKGROUND

With popularization of vehicles, people increasingly tend to choose the vehicles for travel. People may stay in the vehicles for a long time in both long-distance travel and urban congestion scenarios. Therefore, some auxiliary facilities need to be provided, to provide entertainment and recreation for passengers in the vehicle, so as to alleviate fatigue during ride. A common entertainment manner of the passenger is to use an electronic device like a mobile phone in the vehicle. This requires that the electronic device is firmly fastened to a base (for example, a back of a front seat) of the vehicle by using a vehicle-mounted support, so that hands of the passenger can be freed, and ride experience can be improved. The vehicle-mounted support can prevent the electronic device from falling off due to shaking in a traveling process of the vehicle.

Although an existing vehicle-mounted support can fasten the electronic device to the vehicle, there are still many drawbacks. Therefore, an improved vehicle-mounted support is still required, to overcome various problems in the existing solution, so as to further improve user experience.

### SUMMARY

To overcome problems and/or another potential problem in an existing solution, embodiments of this disclosure provide a support for fastening a load and a vehicle.

According to a first aspect, an implementation of this disclosure relates to a support for fastening a load. The support includes a fastening part, where the fastening part includes a fastening body, adapted to be fastened to a base and including a notch, and a cover body, coupled to the fastening body and adapted to seal the notch in a sealing state, where the cover body includes a first magnet and a lock tongue connected to the first magnet, and the lock tongue is capable of entering, in a locking state, an accommodation cavity disposed in the fastening body; and a movable part, configured to: fasten the load and be detachably mounted to the fastening part, where the movable part includes a second magnet, and when the movable part is mounted to the fastening part, the second magnet is configured to: enable, through a magnetic action with the first magnet, the lock tongue to leave the accommodation cavity and change from the locking state to an unlocking state, and enable the cover body to change from the sealing state to an unsealing state under driving of the movable part, so that the notch is exposed to accommodate at least a part of the movable part.

According to the implementation of this disclosure, the second magnet of the movable part is used to drive the first magnet on the cover body to move, so as to drive the lock tongue to move, thereby completing an unlocking action. In this way, the notch on the support can be prevented from being randomly opened, but can be opened only when being used, to avoid a safety risk and a risk of falling of a foreign object.

In some implementations, the cover body further includes a cover body spring, and the cover body spring is configured to be reset when the movable part is separated from the fastening part, so that the cover body changes from the unsealing state to the sealing state, to seal the notch. In this manner, when a user separates the movable part from the fastening part for not using the support, the notch may also be closed, to prevent the foreign object from falling off.

In some implementations, the cover body further includes a lock tongue spring, one end of the lock tongue spring is coupled to the lock tongue, and the other end is coupled to the fastening body, and is configured to be reset when the movable part is separated from the fastening part, so that the lock tongue enters the accommodation cavity, to change from the unlocking state to the locking state. In this manner, when the user separates the movable part from the fastening part for not using the support, the lock tongue can effectively lock the cover body, to prevent the cover body from being opened due to external force.

In some implementations, the movable part includes: an insertion part, adapted to be inserted into the notch of the fastening part as the movable part is mounted to the fastening part; and a holding part, coupled to the insertion part and including: a load snap-fit, configured to lock the load; and a load snap-fit switch, coupled to the load snap-fit and configured to move the load snap-fit to lock the load or unlock the load. In this manner, flexible mounting and detachment between the support and the load can be implemented.

In some implementations, the insertion part includes: a support snap-fit, configured to lock the insertion part to the fastening body of the fastening part; and a support snap-fit switch, coupled to the support snap-fit and configured to move the support snap-fit to lock the fastening body or unlock the fastening body. In this manner, flexible mounting and detachment between the insertion part of the support and the fastening body can be implemented.

In some implementations, the holding part includes a charging contact, where the charging contact is configured to provide charging for the load. In this manner, the support can also have a charging function, to improve user experience.

In some implementations, the second magnet is disposed at an end part that is of the insertion part and that is away from the holding part. In this manner, the second magnet and the first magnet can quickly generate the magnetic action, to increase a speed of opening and closing the cover body.

In some implementations, the holding part further includes a magnetic guide member, and the magnetic guide member is disposed on a side surface that is of the holding part and that is away from the insertion part and is configured to guide the load under a magnetic action, so that the load abuts against the holding part. In this manner, the load can be more smoothly guided and fastened to the holding part.

In some implementations, the cover body includes a pivot, the pivot is disposed on a side opposite to the lock tongue, and the cover body is configured to rotate around the pivot. In this manner, it can be ensured that the cover body rotates around the rotating shaft, so that the lock tongue switches between the locking state and the unlocking state.

In some implementations, the fastening part further includes a rotating shaft, and the first magnet and the lock tongue are disposed on two sides of the rotating shaft. In this manner, the first magnet can drive the lock tongue in a rotation manner, so that an applicable scenario can be increased and design flexibility can be improved.

In some implementations, the first magnet includes a plurality of first magnetic elements disposed in pairs and having opposite magnetism, the second magnet includes a plurality of second magnetic elements disposed corresponding to the plurality of first magnetic elements, and magnetism of each second magnetic element is opposite to magnetism of a corresponding first magnetic element. In this manner, the magnets with different magnetism are disposed on two sides of the support, to implement only one effective unlocking manner, and effectively prevent the user from reversely inserting the vehicle-mounted charging support.

In some implementations, the base is disposed on a seat of a means of transportation, and the means of transportation includes one or more of a vehicle, aircraft, a ship, and a train. In this manner, the support in this disclosure can be used in various scenarios, to improve applicability of the support.

According to a second aspect, an implementation of this disclosure relates to a vehicle. The vehicle includes the support according to the first aspect of this disclosure.

These or other aspects of this disclosure are more concise and easier to understand in descriptions in the following (a plurality of) implementations.

### BRIEF DESCRIPTION OF DRAWINGS

The foregoing and other features, advantages, and aspects of embodiments of this disclosure become more apparent with reference to accompanying drawings and the following detailed descriptions. In the accompanying drawings, same or similar reference numerals indicate same or similar elements. The accompanying drawings are not necessarily drawn in proportion.
FIG. 1A is a three-dimensional diagram of a fastening part of a support according to an example implementation of this disclosure;
FIG. 1B is a three-dimensional diagram of a movable part of a support according to an example implementation of this disclosure;
FIG. 1C is a three-dimensional diagram of a cover body in the fastening part in FIG. 1A facing outward;
FIG. 1D is a three-dimensional diagram of the cover body in FIG. 1C facing inward;
FIG. 1E is a schematic front diagram of the cover body in FIG. 1C facing inward;
FIG. 1F is a schematic front diagram of the movable part in FIG. 1B facing outward;
FIG. 1G is a schematic side diagram of the movable part in FIG. 1B;
FIG. 2A is a three-dimensional diagram of a fastening part of a support according to another example implementation of this disclosure;
FIG. 2B is a three-dimensional diagram of a movable part of a support according to another example implementation of this disclosure;
FIG. 2C is a three-dimensional diagram of a cover body in the fastening part in FIG. 2A facing outward;
FIG. 2D is a three-dimensional diagram of the cover body in FIG. 2C facing inward;
FIG. 2E is a schematic front diagram of the cover body in FIG. 2C facing inward;
FIG. 3A is a three-dimensional diagram of a fastening part of a support according to still another example implementation of this disclosure;
FIG. 3B is a three-dimensional diagram of a movable part of a support according to still another example implementation of this disclosure;
FIG. 3C is a three-dimensional diagram of a cover body in the fastening part in FIG. 3A facing outward;
FIG. 3D is a three-dimensional diagram of the cover body in FIG. 3C facing inward; and
FIG. 3E is a schematic front diagram of the cover body in FIG. 3C facing inward.

### DESCRIPTION OF EMBODIMENTS

Embodiments of this disclosure are described in more detail in the following with reference to accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In descriptions of embodiments of this disclosure, terms "include" and similar terms thereof should be understood as open inclusion, that is, "include but are not limited to". A term "based on" should be understood as "at least partially based on". A term "one embodiment" or "this embodiment" should be understood as "at least one embodiment". Terms "first", "second", and the like may indicate different objects or a same object. In addition, terms "connection", "coupling", "coupling connection", and the like may indicate that related components are associated in different forms, including mechanical association, and association in an electrical manner, a magnetic manner, a thermal manner, or the like. The association includes direct association and indirect association through an intermediate component, and includes wired association and wireless association. Other explicit and implicit definitions may also be included below. In addition, a word "adapted to" may be understood as "may" or "can" indicating that a modified object has a capability.

As described above, although the existing vehicle-mounted support can fasten the electronic device to the vehicle, there are still many drawbacks. For example, an existing solution is that a user separately purchases a standalone support, and fastens an electronic device to a vehicle by using the support. However, the support is of a low grade, and cannot charge the electronic device. In addition, the standalone support needs to be fastened by using some parts (for example, a headrest of a front seat) of the vehicle. Therefore, a mounting height of the standalone support is usually high. This results in a limited angle at which a passenger views the electronic device, and poor user experience. In another existing solution, a slot for inserting a vehicle-mounted support is disposed at a rear part of a seat of a vehicle, to provide a function of inserting, removing, or fastening the electronic device. However, these slots are also exposed when not being used, and are prone to dust accumulation or falling of a foreign object. For example, liquid like beverage may be spilled into the slot, a safety risk is caused. In addition, the existing slot does not have a foolproof design, and cannot effectively prevent the user from reversely inserting the vehicle-mounted charging support.

To resolve at least the foregoing problem, embodiments of this disclosure provide a support used on a means of transportation, to fasten a load to the means of transportation. The support uses a magnetic unlocking structure, and is unlocked only when a user plans to fasten the load to the means of transportation for use, and is firmly locked when not being used, to prevent a foreign object from falling off and ensure passenger safety. In addition, the support according to embodiments of this disclosure has a foolproof design, so that the user can be prevented from reversely inserting the support, to improve user experience.

It should be noted that, in the context of this disclosure, the term "means of transportation" may be in various forms. The means of transportation may be vehicles in various forms, for example, an electric vehicle or a fuel vehicle, or may be a hybrid electric vehicle. In some embodiments, the vehicle may be a car, a truck, a trailer, a motorcycle, a bus, an agricultural vehicle, an entertainment vehicle, a construction vehicle, or the like. In some embodiments, the means of transportation may be a household vehicle, a passenger vehicle of an operational nature, a freight vehicle of an operational nature, or the like. In some embodiments, the means of transportation may be a vehicle with a specific autonomous driving capability. The autonomous driving capability may include but is not limited to an assisted driving capability, a semi-autonomous driving capability, a highly autonomous driving capability, or a fully autonomous driving capability. In another embodiment, the means of transportation may alternatively be aircraft in various forms, for example, passenger aircraft. In another embodiment, the means of transportation may alternatively be in a form of, for example, a ship or a train. A specific form of the means of transportation is not particularly limited in this disclosure. It should be further noted that, in the context of this disclosure, the term "load" may be loads in various forms, for example, but is not limited to an electronic device like a mobile phone, a tablet computer, a camera, or a screen used by a user. In another embodiment, the load may alternatively be any object fastened to the means of transportation, for example, a makeup mirror, a book, a magazine, or another daily necessity. A specific form of the load is not particularly limited in this disclosure. The following describes embodiments of this disclosure by using an example in which the electronic device is fastened to the back of the seat of the vehicle. However, a person skilled in the art may understand that this is merely for clarity of description, and another similar use scenario may be envisaged. This is not particularly limited in embodiments of this disclosure.

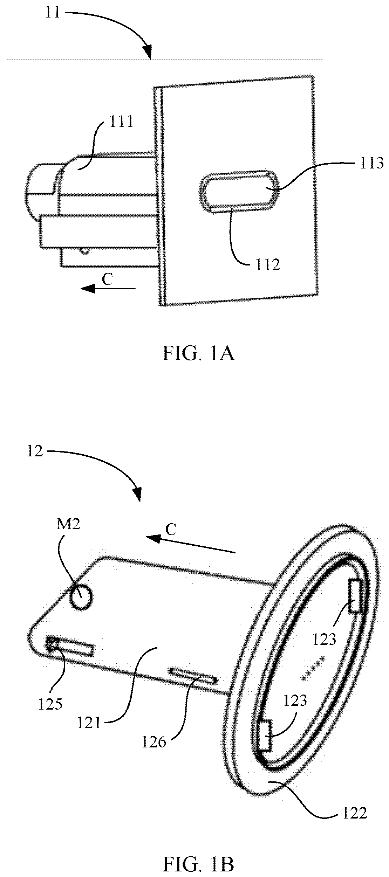

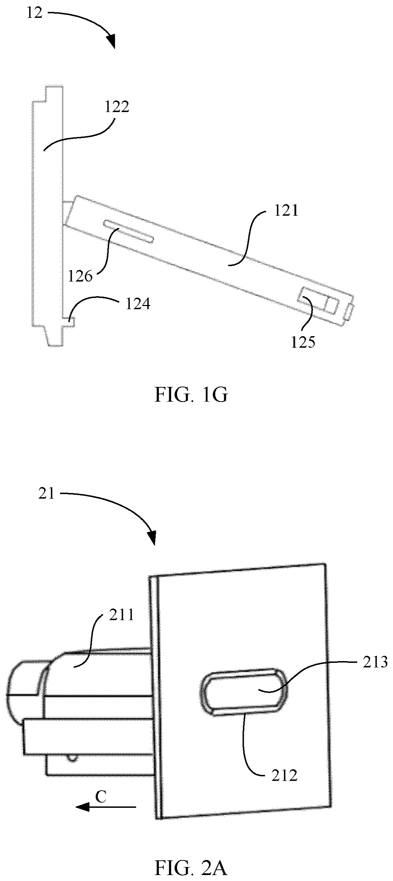

The following describes a detailed structure and a corresponding working process of a support according to an example embodiment of this disclosure with reference to FIG. 1A to FIG. 1G. The support generally includes a fastening part 11 shown in FIG. 1A and a movable part 12 shown in FIG. 1B. The fastening part 11 may be mounted to a base (for example, a rear part of a front seat) of a vehicle, and the movable part 12 is configured to be fastened to an electronic device (not shown) via load snap-fits 123. In a use process, the movable part 12 may be mounted to the fastening part 11 in an insertion direction C. When the movable part 12 is not required to be used, the movable part 12 may be detached from the fastening part 11 in a direction opposite to the insertion direction C.

In the use process, a user may first mount the electronic device to the movable part 12 via the load snap-fit 123 on the movable part 12, and then mount the movable part 12 on which the electronic device is mounted to the fastening part 11, to complete fastening of the electronic device to the vehicle body. In another use scenario, the user may first assemble the movable part 12 and the fastening part 11, and then mount the electronic device to the movable part 12 via the load snap-fit 123. After use, the user only needs to press a load snap-fit switch 124 coupled to the load snap-fit 123, to detach the electronic device from the movable part 12.

Still refer to FIG. 1A. The fastening part 11 includes a fastening body 111 and a cover body 113. The fastening body 111 may be fastened to the rear back of the seat of the vehicle in various manners, and includes a notch 112. A surface on which the notch 112 is located may be substantially aligned with a surface of the back of the seat of the vehicle, to ensure safety and appearance. The notch 112 faces the user, so that the user inserts the movable part 12 into the notch 112. This is described in detail later. The cover body 113 is coupled to the fastening body 111 and can seal the notch 112 in a sealing state.

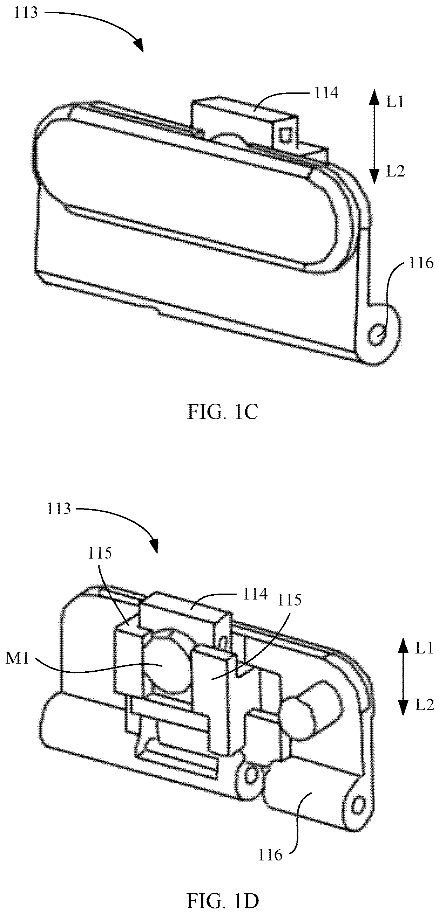

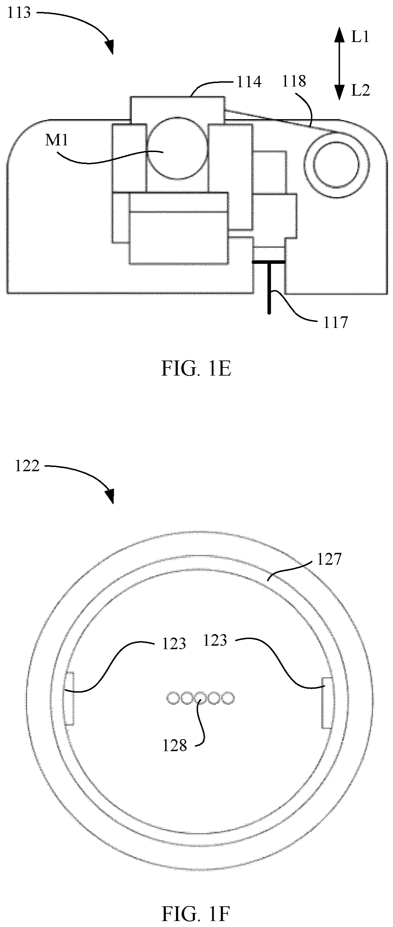

FIG. 1C to FIG. 1E are diagrams of the cover body 113 of the fastening part 11 in FIG. 1A from different perspectives. FIG. 1C is a three-dimensional diagram of the cover body 113 observed from a perspective of a user (namely, outward). FIG. 1D is a three-dimensional diagram of the cover body 113 observed outward from the notch, that is, a structure of the back of the cover body 113 is shown. FIG. 1E is a planar diagram of the structure of the back of the cover body 113. An overall structure of the cover body 113 is shown in detail in FIG. 1C, and FIG. 1A shows only a part of the cover body 113 exposed to an external environment in the sealing state. In some embodiments, with reference to FIG. 1A, FIG. 1C, and FIG. 1D, the cover body 113 includes a pivot 116 located at a lower part, and the pivot 116 is fastened to the fastening body 111. The cover body 113 can rotate around the pivot 116, and as the cover body 113 rotates, the cover body 113 can switch back and forth between the sealing state and an unsealing state, to seal the notch 112 and expose the notch 112 to the user. It may be understood that the pivot 116 may alternatively be disposed on another part of the cover body 113 in a manner different from that in the figure, for example, disposed at an upper part or on a left side or a right side of the cover body 113. Correspondingly, rotation directions of the cover body 113 are different. This is not particularly limited in embodiments of this disclosure.

As shown in FIG. 1D, the cover body 113 includes a first magnet M1 and a lock tongue 114 connected to the first magnet M1. As shown in the figure, the lock tongue 114 may be a small cubic block, and the first magnet M1 may be bonded or fastened to a surface of the lock tongue 114 in another manner. Specific shapes of the first magnet M1 and the lock tongue 114 and a connection manner between the first magnet M1 and the lock tongue 114 are not limited in embodiments of this disclosure, provided that the first magnet M1 and the lock tongue 114 can be fastened together and can move together. The first magnet M1 and the lock tongue 114 may be limited to specific space by limiting parts 115, and can move back and forth together in a movement direction L1 and a direction L2 opposite to the direction L1. An accommodation cavity (not shown) is disposed on the fastening body 111, and a position and a size of the accommodation cavity are designed just to enable the lock tongue 114 to enter. With reference to FIG. 1C, the accommodation cavity may be disposed above the lock tongue 114, so that when the first magnet M1 moves upward in the direction L1 with the lock tongue 114 (that is, causes the lock tongue 114 to extend out of the cover body 113), the lock tongue 114 can enter the accommodation cavity, and therefore is in a locking state.

Refer to FIG. 1C. As shown in the figure, the lock tongue 114 is disposed on a side opposite to the pivot 116. An arrangement manner of the lock tongue 114 and the pivot 116 is not particularly limited in embodiments of this disclosure. For example, in another embodiment, when the pivot 116 is located at an upper part of the cover body 113, the lock tongue 114 may be correspondingly disposed at a lower part of the cover body 113. This manner is also feasible.

The following describes the movable part 12 of the support with reference back to FIG. 1B. As shown in the figure, the movable part 12 may include a holding part 122 configured to hold the electronic device and an insertion part 121 coupled to the holding part 122. The user may make the insertion part 121 approach the cover body 113 of the fastening part 11 and open the cover body 113 as the insertion part 121 approaches the notch 112 in the insertion direction C. As shown in FIG. 1B, a second magnet M2 is disposed at one end (for example, a front end closest to the notch 112 in an insertion process) of the insertion part 121. When the insertion part 121 approaches the cover body 113, a magnetic action may be generated between the second magnet M2 and the first magnet M1. In some embodiments, the first magnet M1 and the second magnet M2 may have opposite magnetism, to attract each other.

The following describes the working process of the support shown in the figures with reference to FIG. 1A to FIG. 1G. When the support is not used, no electronic device is mounted to the fastening part 11 of the support. In this case, the lock tongue 114 and the first magnet M1 are in an upper limit position shown in FIG. 1D. In this way, it can be ensured that the lock tongue 114 enters the accommodation cavity of the fastening body 111. In other words, when the support is not used, the lock tongue 114 is in the locking state, so that the cover body 113 seals the notch 112 of the fastening part 11, to prevent dust or a foreign object from entering the notch 112, so as to ensure good dustproof and safety effect. When the user expects to fasten the electronic device to the seat of the vehicle, the user makes the movable part 12 approach the fastening part 11 and attempts to mount the movable part 12 to the fastening part 11 in the insertion direction C. A position of the second magnet M2 is cleverly designed as follows: When the movable part 12 is inserted, a height of the second magnet M2 is lower than that of the upper limit position of the first magnet M1. Therefore, when the second magnet M2 approaches the cover body 113 in the insertion direction C with the insertion part 121, the first magnet M1 at the back of the cover body 113 is attracted to move downward under the magnetic action. Because the first magnet M1 and the lock tongue 114 are fastened together, the lock tongue 114 also gradually leaves the accommodation cavity as the first magnet M1 moves downward, so that the lock tongue 114 gradually transits from the locking state to an unlocking state. In addition, as the movable part 12 is gradually inserted in the insertion direction C, the movable part 12 is in contact with the cover body 113 and pushes the cover body 113 to gradually open. Before this, the first magnet M1 drives, under the magnetic action, the lock tongue 114 to leave the accommodation cavity. Therefore, there is no resistance that hinders movement of the cover body 113, and the movable part 12 can smoothly change from a sealed state to an unsealed state, to expose the notch 112. The exposed notch 112 may accommodate at least a part of the movable part 12, for example, may accommodate the insertion part 121 of the movable part 12.

Refer back to FIG. 1B. As shown in the figure, the insertion part 121 may include a support snap-fit 125, and the support snap-fit 125 is disposed to enable the insertion part 121 to be firmly locked to the fastening body 111 of the fastening part 11. It may be envisaged that a corresponding structure (not shown) that fits the support snap-fit 125 is disposed inside the notch 112 of the fastening body 111, to ensure a firm connection between the insertion part 121 and the fastening body 111, and finally, implement a secure connection between the electronic device and the vehicle body. A person skilled in the art should understand that the insertion part 121 may be firmly connected to the fastening body 111 by using various detachable connection methods known in the art or developed in the future, so that the movable part 12 and the fastening part 11 are firmly mounted. This is not particularly limited in embodiments of this disclosure.

According to this embodiment of this disclosure, the lock tongue 114 fastened together with the first magnet M1 is disposed on the cover body 113 of the fastening part 11, and the lock tongue 114 is detached from the accommodation cavity only under the magnetic action. Therefore, the lock tongue 114 can unlock only when the user inserts the movable part 12 having the second magnet M2. In this way, the notch 112 on the cover body 113 is exposed only when being used. In this magnetic unlocking manner, when the notch 112 is not used, the foreign object can be effectively prevented from falling off, to improve safety.

The following describes a schematic process of detaching the movable part 12 from the fastening part 11 and enabling the cover body 13 to re-seal the notch 112.

First, refer to FIG. 1B. As shown in FIG. 1B, the insertion part 121 may further include a support snap-fit switch 126 that can be linked with the support snap-fit 125. The support snap-fit switch 126 may be considered as a control switch of the support snap-fit 125. When the insertion part 121 is firmly mounted to the fastening body 111 via the support snap-fit 125 and the corresponding structure in the notch 112, if the user needs to detach the movable part 12, the user may press the support snap-fit switch 126, to detach the support snap-fit 125 from the corresponding structure in the notch 112 through linkage, and finally unlock the movable part 12 from the fastening body 111 of the fastening part 11. In this case, because the movable part 12 is detached from the fastening part 11, the movable part 12 may keep away from the fastening part 11 in the direction opposite to the insertion direction C.

As shown in FIG. 1E, the cover body 113 may further include a cover body spring 117. When the movable part 12 is mounted to the fastening part 11 in the insertion direction C, as described above, the cover body 113 changes from the sealing state to the unsealing state, to expose the notch 112. In this process, the cover body spring 117 is compressed. As the movable part 12 is separated from the fastening part 11 in the direction opposite to the insertion direction C, the cover body spring 117 is reset under an elastic action, so that the cover body 113 changes from the unsealing state to the sealing state, to seal the notch 112. In this manner, after the user pulls out the movable part 12, the notch 112 is still sealed. Therefore, the cover body 113 automatically returns under the elastic action, to avoid dust accumulation and falling of the foreign object when not being used.

Still refer to FIG. 1E. The cover body 113 may further include a lock tongue spring 118. One end of the lock tongue spring 118 is coupled to the lock tongue 114, and the other end is coupled to the fastening body 111. When the movable part 12 is mounted to the fastening part 11 in the insertion direction C, as described above, the lock tongue 114 moves downward in the direction L2 under the magnetic action and is detached from the accommodation cavity of the fastening body 111. In this process, the lock tongue 114 compresses the lock tongue spring 118. As the movable part 12 is separated from the fastening part 11 in the direction opposite to the insertion direction C, the lock tongue spring 118 is reset under an elastic action, so that the lock tongue 114 and the first magnet M1 on the lock tongue 114 move in the direction L1 opposite to the direction L2. Therefore, the first magnet M1 is gradually detached from the second magnet M2, and the lock tongue 114 gradually enters the accommodation cavity, and changes from the unlocking state to the locking state. In this manner, when the user pulls out the movable part 12, the lock tongue 114 can automatically lock under the elastic action, and the lock tongue 114 is firmly locked on the fastening body 111, to ensure that the cover body 113 is not pried open by external force when not being used.

In an existing solution, if it is expected that the notch is not exposed to the external environment, it is required that the movable part also needs to be retained on the fastening part for a long time when not being used. In this case, if a special case like emergency braking occurs in a traveling process of the vehicle, the protruding movable part left on the fastening part may bring potential danger and injury to a passenger. Compared with that in the existing solution, in the support according to this embodiment of this disclosure, the cover body 113 can automatically return after the movable part 12 is pulled out, and the lock tongue 114 can automatically lock after the movable part 12 is pulled out. In this way, the movable part 12 can be detached when not being used. This can avoid the danger caused by protruding an additional component behind the seat, and greatly ensure driving safety of the passenger.

FIG. 1F is a front diagram of the holding part 122 for the user to hold a load according to an embodiment of this disclosure. The diagram is observed from a side that is of the movable part 12 and that is away from the insertion part 121, that is, from a side facing the user. Further details of the support in this embodiment of this disclosure are described with reference to FIG. 1F. In the embodiment shown in the figure, the load snap-fits 123 may be disposed at the holding part 122, and is configured to clamp a load like the electronic device. In some embodiments, the holding part 122 may further include a charging contact 128. When the electronic device is clamped to the holding part 122, the charging contact 128 may provide power for the electronic device, for example, in a wireless charging manner. In this manner, the user can conveniently charge the electronic device by using electric energy of the vehicle in the traveling process.

In some embodiments, the holding part 122 may further include a magnetic guide member 127. The magnetic guide member 127 is disposed on a side surface that is of the holding part 122 and that is away from the insertion part 121, that is, a side close to the load, and can guide, under a magnetic action, the load to abut against the holding part 122. In this manner, the user can more easily attach the electronic device to the holding part 122 of the movable part 12, to improve user experience (the magnetic guide member 127 facilitates matching between the electronic device and the protective case of the electronic device and the holding part 122). Because the support can adapt to a plurality of electronic devices, the support in this disclosure is strongly universal.

The following describes a structure of a support according to another embodiment of this disclosure with reference to FIG. 2A to FIG. 2E. As shown in the figure, the support similarly includes a fastening part 21 and a movable part 22. A main difference between the embodiment in FIG. 2A to FIG. 2E and the embodiment in FIG. 1A to FIG. 1G lies in that the former includes two first magnets M11 and M12 and two corresponding second magnets M21 and M22. For brevity, parts that are the same as or similar to those in the foregoing embodiment are omitted.

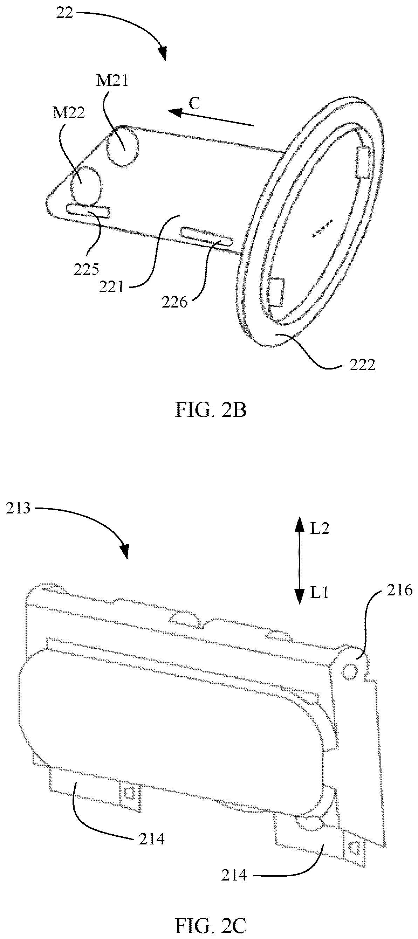

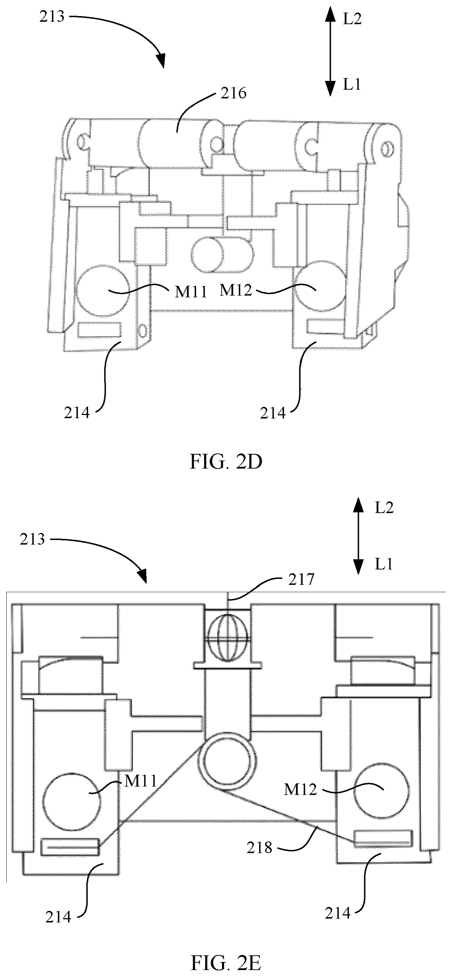

As shown in FIG. 2B, the two second magnets M21 and M22 are disposed at an end part that is of an insertion part 221 and that is away from the holding part 222. The two second magnets M21 and M22 may be symmetrically disposed with respect to a central axis of the movable part 22, or may be asymmetrically disposed. This is not limited in embodiments of this disclosure. With reference to FIG. 2D, the two first magnets M1 are respectively located on two lock tongues 214, and may move back and forth with the lock tongues 214 in a movement direction L1 and a direction L2 opposite to the direction L1. In addition, it is clearly seen from FIG. 2C and FIG. 2D that a pivot 216 is located at an upper part of a cover body 213, and correspondingly, the lock tongue 214 is located at a lower part of the cover body 213. It should be understood that positions of the pivot 216 and the lock tongue 214 may alternatively be changed based on an actual design requirement. For example, the pivot 216 is located at a lower part of the cover body 213, and the lock tongue 214 is located at an upper part of the cover body 213.

An accommodation cavity (not shown) may be disposed on a fastening body 211, and a quantity, positions, and sizes of accommodation cavities are designed just to enable the lock tongues 214 to enter. With reference to FIG. 2C, two accommodation cavities may be disposed in positions that are of the fastening body 211 and that are below the lock tongues 214, so that when the first magnet M1 moves downward in the direction L1 with the corresponding lock tongue 214 (that is, causes the lock tongue 214 to extend out of the cover body 213), the lock tongue 214 can enter a corresponding accommodation cavity, and therefore is in a locking state.

The following briefly describes a working process of the support shown in FIG. 2A to FIG. 2E. When the support is not used, no electronic device is mounted to the fastening part 21. In this case, the lock tongue 214 is in the locking state. With reference to FIG. 2D, in this case, the two lock tongues 214 and the corresponding first magnets M11 and M12 are in lower limit positions. In this way, it can be ensured that the lock tongues 214 enter the accommodation cavities of the fastening body 211, so that the cover body 213 seals a notch 212 of the fastening part 21, to prevent dust or a foreign object from entering the notch 212, so as to ensure good dustproof and safety effect. When a user expects to fasten an electronic device to a seat of a vehicle, the user makes the movable part 22 approach the fastening part 21 and attempts to mount the movable part 22 to the fastening part 21 in an insertion direction C. Positions of the second magnets M21 and M22 are cleverly designed as follows: When the movable part 22 is inserted, heights of the second magnets M21 and M22 are higher than those of the lower limit positions of the first magnets M11 and M12. Therefore, when the second magnets M21 and M22 approach the cover body 213 in the insertion direction C with the insertion part 221, the first magnets M11 and M12 at the back of the cover body 213 are attracted to move upward under a magnetic action. Because the first magnets M11 and M12 and the lock tongues 214 are fastened together, the lock tongues 214 also gradually leave the accommodation cavities as the first magnets M11 and M12 move upward, so that the lock tongues 214 gradually transit from the locking state to an unlocking state. In addition, as the movable part 22 is gradually inserted in the insertion direction C, the movable part 22 is in contact with the cover body 213 and pushes the cover body 213 to gradually open. Before this, the first magnets M11 and M12 drive, under the magnetic action, the lock tongues 214 to leave the accommodation cavities. Therefore, there is no resistance that hinders movement of the cover body 213, and the movable part 22 can smoothly change from a sealed state to an unsealed state, to expose the notch 212. The exposed notch 212 may accommodate at least a part of the movable part 22, for example, may accommodate the insertion part 221 of the movable part 22.

Refer to FIG. 2B. As shown in the figure, the insertion part 221 may also include a support snap-fit 225 and a corresponding support snap-fit switch 226. Working principles and manners of the support snap-fit 225 and the corresponding support snap-fit switch 226 are similar to those of the support snap-fit 125 and the corresponding support snap-fit switch 126 described above. Details are not described herein again.

When the user needs to detach the movable part 22 from the fastening part 21, the user may make the movable part 22 keep away from the fastening part 21 in a direction opposite to the insertion direction C. As shown in FIG. 2E, the cover body 213 further includes a cover body spring 217. When the movable part 22 is mounted to the fastening part 21 in the insertion direction C, as described above, the cover body 213 changes from the sealing state to the unsealing state, to expose the notch 112. In this process, the cover body spring 217 is compressed. As the movable part 22 is separated from the fastening part 21 in the direction opposite to the insertion direction C, the cover body spring 217 is reset under an elastic action, so that the cover body 213 changes from the unsealing state to the sealing state, to seal the notch 212. In this manner, when the user pulls out the movable part 22, the cover body 213 may automatically return under the elastic action.

Still refer to FIG. 2E. The cover body 213 may further include a lock tongue spring 218, and the lock tongue spring 218 is separately coupled to each lock tongue 214 and the fastening body 211. When the movable part 22 is mounted to the fastening part 21 in the insertion direction C, as described above, the lock tongue 214 moves upward in the direction L2 under the magnetic action and is detached from the accommodation cavity of the fastening body 211. In this process, the lock tongue 214 compresses the lock tongue spring 218. As the movable part 22 is separated from the fastening part 21 in the direction opposite to the insertion direction C, the lock tongue spring 218 is reset under an elastic action, so that the lock tongues 214 and the first magnets M11 and M12 on the lock tongues 214 move in the direction L1 opposite to the direction L2. Therefore, the first magnets M11 and M12 are gradually detached from the corresponding second magnets M21 and M22, and the lock tongues 114 gradually enter the accommodation cavities, and change from the unlocking state to the locking state. In this manner, when the user pulls out the movable part 22, the lock tongue 214 can automatically lock under the elastic function.

The two lock tongues 214 are disposed, so that better locking assurance can be provided when the lock tongues 214 are locked in the accommodation cavities. In this way, even if one lock tongue 214 is detached from the accommodation cavity, the other lock tongue 214 can still maintain the locking state to some extent, to implement a dual insurance function.

In some existing solutions, both the cover body of the fastening part and the insertion part of the movable part are in a runway shape, and the user may flip the movable part upside down due to negligence in an insertion process, and results in incorrect insertion. To resolve this problem, in this embodiment of this disclosure, the two first magnets M11 and M12 and the two second magnets M21 and M22 are correspondingly disposed, to implement foolproof effect, and prevent the user from inserting the movable part 22 incorrectly. Specifically, in some embodiments, the first magnets M11 and M12 may be respectively an N pole and an S pole. The second magnet M21 corresponding to the first magnet M11 is an S pole, and the second magnet M22 corresponding to the first magnet M12 is an N pole. In this case, if the user inserts the movable part 22 incorrectly (that is, the movable part 22 in FIG. 2B is flipped upside down) due to negligence, the second magnet M21 is located on a left side in FIG. 2B, and the second magnet M22 is located on a right side in FIG. 2B. As the user inserts the movable part 22 into the fastening part 21 in the insertion direction C, the second magnet M21 on the left side is close to the first magnet M12 on the cover body 213 of the fastening part 21. Because both the second magnet M21 and the first magnet M12 are S poles, the two repel each other. Correspondingly, the second magnet M22 located on the right side is close to the first magnet M11 on the cover body 213 of the fastening part 21. Because both the second magnet M22 and the first magnet M11 are N poles, the two also repel each other. The mutual repulsion between the magnets provides timely tactile feedback for the user, so that the user is aware of the incorrect insertion and changes to a correct insertion manner.

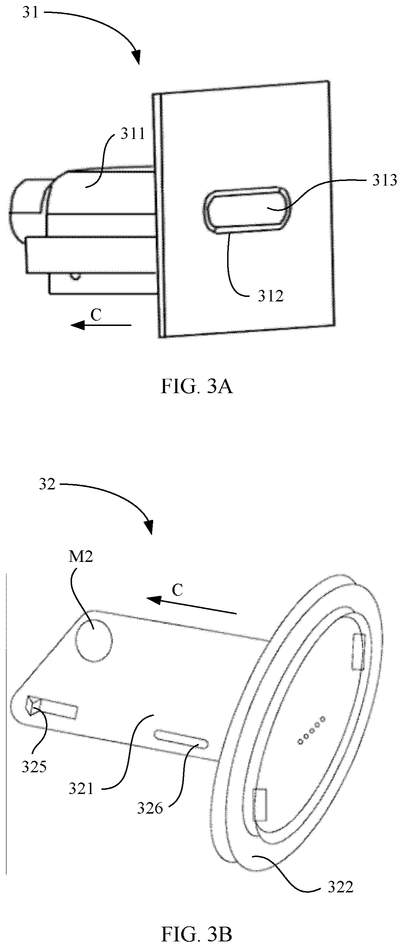

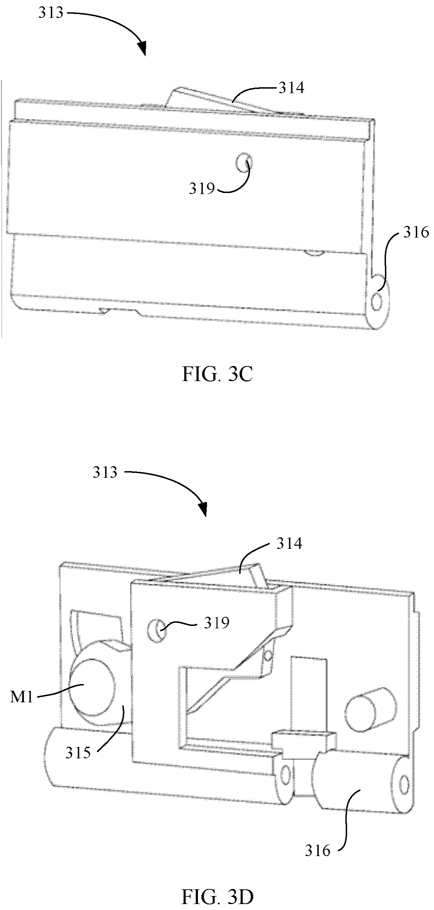

It should be noted that although two first magnets M11 and M12 and two second magnets M21 and M22 are shown in FIG. 3A to FIG. 3E, this is only for description, but not for limitation, and a person skilled in the art may further adjust a quantity of magnets. For example, in another embodiment, there may be four, six, or more first magnets and second magnets. These magnets may be disposed in pairs. This ensures that the support has a foolproof design, further improves mounting firmness of the support, and prevents the electronic device from falling off due to shaking of the support.

The following describes a structure of a support according to still another embodiment of this disclosure with reference to FIG. 3A to FIG. 3E. The support similarly includes a fastening part 31 and a movable part 32. As shown in FIG. 3A and FIG. 3B, this embodiment has an appearance similar to that of the embodiment described above, and a main difference lies in an internal operation manner, which is described in detail below. For brevity, parts that are the same as or similar to those in the foregoing embodiment are omitted.

Refer to FIG. 3D. A pivot 316 around a cover body 313 is located at a lower part the cover body 313, and a lock tongue 314 corresponds to the pivot 316 and is disposed at an upper part of the cover body 313. A first magnet M1 is disposed on a rocker arm 315, and the rocker arm 315 and the lock tongue 314 are integrally formed, and may rotate around a rotating shaft 319. In other words, in the embodiment shown in FIG. 3D, the first magnet M1 is no longer attached to the lock tongue and moves in a same direction as the lock tongue, but rotates in a direction opposite to the lock tongue 314. Specifically, in the embodiment in FIG. 3D, when the first magnet M1 moves upward in response to an action of a second magnet M2, the rotating shaft 319 drives the lock tongue 314 to move downward, so that the lock tongue 314 changes from a locking state to an unlocking state, and vice versa. It should be noted that a person skilled in the art may further envisage another manner to conceive movement between the first magnet M1 and the lock tongue 314. For example, in another embodiment, the first magnet M1 and the lock tongue 314 may be disposed on a same side of the rotating shaft 319. In this case, the first magnet M1 and the lock tongue 314 may rotate in a same direction.

Because space for mounting the vehicle-mounted support is usually limited, embodiments of this disclosure may be implemented in a plurality of manners, so that a designer can implement embodiments of this disclosure based on an actual mounting scenario and a design requirement. Therefore, embodiments of this disclosure have good adaptability, and are applicable to various complex use scenarios.

It may be understood that, although only one lock tongue 314, one first magnet M1, and one second magnet M2 are disposed in the embodiment in FIG. 3A to FIG. 3E, it may be understood that, similar to the embodiment shown in FIG. 2A to FIG. 2E, in the embodiment in FIG. 3A to FIG. 3E, a plurality of lock tongues, first magnets, and second magnets may be disposed, so that the support has a foolproof design while mounting firmness of the support is improved.

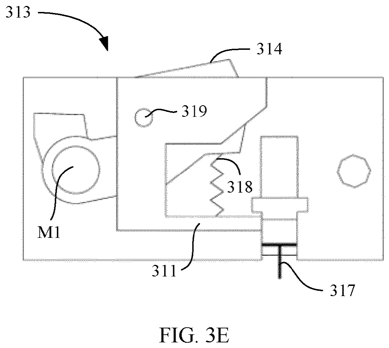

In some embodiments, as shown in FIG. 3E, the cover body 313 may also include a cover body spring 317. The cover body spring 317 is configured to be reset when the movable part 32 is separated from the fastening part 31, so that the cover body 313 changes from an unsealing state to a sealing state, and the cover body 313 automatically returns.

In some embodiments, as shown in FIG. 3E, the cover body 113 may further include a lock tongue spring 318. One end of the lock tongue spring 318 is coupled to the lock tongue 314, and the other end is coupled to a fastening body 311. When the movable part 32 is separated from the fastening part 31, the lock tongue spring 318 is reset, so that the lock tongue 314 enters an accommodation cavity, to change from the unlocking state to the locking state. In this way, the lock tongue 314 automatically locks.

This disclosure further relates to a vehicle. The vehicle includes the support described above. The vehicle may be in various forms. This is not particularly limited in embodiments of this disclosure.

Compared with that in a conventional solution, the vehicle-mounted support according to embodiments of this disclosure improves a problem that the support and a slot in the conventional solution do not have a magnetic unlocking structure, and a user cannot be prevented from reversely inserting the charging support, and enhances safety protection for a passenger. In addition, the support according to embodiments of this disclosure does not need to be fastened by using a fastening apparatus like a seat headrest, but may be disposed at any proper height of a seat of a vehicle, so that a user can have a good viewing angle when fastening an electronic device to the support, to greatly improve user experience.

Although the subject matter is described in a language specific to structural features and/or method logic actions, it should be understood that the subject matter defined in the appended claims is not necessarily limited to the particular features or actions described above. On the contrary, the particular features and actions described above are merely example forms for implementing the claims.

## Claims

1. A support for fastening a load, comprising:
a fastening part, comprising:
a fastening body, adapted to be fastened to a base and comprising a notch, and
a cover body, coupled to the fastening body and adapted to seal the notch in a sealing state, wherein the cover body comprises a first magnet and a lock tongue connected to the first magnet, and the lock tongue is capable of entering, in a locking state, an accommodation cavity disposed in the fastening body; and
a movable part, configured to: fasten the load and be detachably mounted to the fastening part, wherein the movable part comprises a second magnet, and when the movable part is mounted to the fastening part, the second magnet is configured to: enable, through a magnetic action with the first magnet, the lock tongue to leave the accommodation cavity and change from the locking state to an unlocking state, and enable the cover body to change from the sealing state to an unsealing state under driving of the movable part, so that the notch is exposed to accommodate at least a part of the movable part.

2. The support according to claim 1, wherein the cover body further comprises a cover body spring, and the cover body spring is configured to be reset when the movable part is separated from the fastening part, so that the cover body changes from the unsealing state to the sealing state, to seal the notch.

3. The support according to claim 1 or 2, wherein the cover body further comprises a lock tongue spring, one end of the lock tongue spring is coupled to the lock tongue, and the other end is coupled to the fastening body, and is configured to be reset when the movable part is separated from the fastening part, so that the lock tongue enters the accommodation cavity, to change from the unlocking state to the locking state.

4. The support according to any one of claims 1 to 3, wherein the movable part comprises:
an insertion part, adapted to be inserted into the notch of the fastening part as the movable part is mounted to the fastening part; and
a holding part, coupled to the insertion part and comprising:
a load snap-fit, configured to lock the load; and
a load snap-fit switch, coupled to the load snap-fit and configured to move the load snap-fit to lock the load or unlock the load.

5. The support according to claim 4, wherein the insertion part comprises:
a support snap-fit, configured to lock the insertion part to the fastening body of the fastening part; and
a support snap-fit switch, coupled to the support snap-fit and configured to move the support snap-fit to lock the fastening body or unlock the fastening body.

6. The support according to claim 4 or 5, wherein the holding part comprises a charging contact, wherein the charging contact is configured to provide charging for the load.

7. The support according to any one of claims 4 to 6, wherein the second magnet is disposed at an end part that is of the insertion part and that is away from the holding part.

8. The support according to any one of claims 4 to 7, wherein the holding part further comprises a magnetic guide member, and the magnetic guide member is disposed on a side surface that is of the holding part and that is away from the insertion part and is configured to guide the load under a magnetic action, so that the load abuts against the holding part.

9. The support according to any one of claims 1 to 8, wherein the cover body comprises a pivot, the pivot is disposed on a side opposite to the lock tongue, and the cover body is configured to rotate around the pivot.

10. The support according to any one of claims 1 to 9, wherein the fastening part further comprises a rotating shaft, and the first magnet and the lock tongue are disposed on two sides of the rotating shaft.

11. The support according to any one of claims 1 to 10, wherein the first magnet comprises a plurality of first magnetic elements disposed in pairs and having opposite magnetism, the second magnet comprises a plurality of second magnetic elements disposed corresponding to the plurality of first magnetic elements, and magnetism of each second magnetic element is opposite to magnetism of a corresponding first magnetic element.

12. The support according to any one of claims 1 to 11, wherein the base is disposed on a seat of a means of transportation, and the means of transportation comprises one or more of a vehicle, aircraft, a ship, and a train.

13. A vehicle, comprising the support according to any one of claims 1 to 12.
